## Europäisches Patentamt

## European Patent Office

## Office européen des brevets

(11) Veröffentlichungsnummer: **0 005 150**
B1

(12) ## EUROPÄISCHE PATENTSCHRIFT

(45) Veröffentlichungstag der Patentschrift:
24.03.82

(21) Anmeldenummer: **79100575.4**

(22) Anmeldetag: **26.02.79**

(51) Int. Cl.³: **C 08 L 77/00**, C 08 L 61/06, C 08 K 3/32

(54) Flammfeste Polyamidformmassen und ihre Verwendung zur Herstellung von Formkörpern.

(30) Priorität: **10.03.78 DE 2810549**

(43) Veröffentlichungstag der Anmeldung:
**14.11.79 Patentblatt 79/23**

(45) Bekanntmachung des Hinweises auf die Patenterteilung:
**24.03.82 Patentblatt 82/12**

(84) Benannte Vertragsstaaten:
**DE FR GB IT NL**

(56) Entgegenhaltungen:
**CH-A-417 083**
**US-A-3 595 936**
**US-A-3 776 806**
**US-A-3 901 952**

(73) Patentinhaber: **BAYER AG, Zentralbereich Patente, Marken und Lizenzen, D-5090 Leverkusen 1, Bayerwerk (DE)**

(72) Erfinder: **Tacke, Peter, Dr., Brandenburger Strasse 12, D-4150 Krefeld (DE)**
Erfinder: **Neuray, Dieter, Dr., Buschstrasse 149, D-4150 Krefeld (DE)**
Erfinder: **Michael, Dietrich, Dr., Deswatinesstrasse 57, D-4150 Krefeld (DE)**

ACTORUM AG.

## Flammfeste Polyamidformmassen und ihre Verwendung zur Herstellung von Formkörpern

Gegenstand der vorliegenden Erfindung sind verstärkte und/oder gefüllte selbstverlöschende Polyamidformmassen die als Brandschutzmittel Kombinationen aus Phenol-Aldehyd-Harzen und Alkali-und/oder Ammoniumpolyphosphaten enthalten.

Als Brandschutzmittel für glasfaserverstärkte oder mineralgefüllte Polyamidformmassen werden heute in technischem Massstab Kombinationen von Halogenverbindungen und synergistisch wirkenden Metallverbindungen oder pulverisierter roter Phosphor eingesetzt. Diese Brandschutzmittel und ihre Verwendung sind beispielsweise im US-Patent 3 418 267, in der DE-AS 1 694 494, der DE-OS 2 544 219 und der DE-AS 1 931 387 beschrieben.

Die Verwendung von Halogenverbindungen als Brandschutzmittel ist jedoch mit einer Reihe von Nachteilen verbunden. Beispielsweise wird dadurch die Kriechstromfestigkeit der PA-Formmassen drastisch gesenkt, so dass diese Produkte im Elektrosektor nur bedingt einsetzbar sind. Zu bedenken ist auch, dass Halogenverbindungen enthaltende Formmassen bei den erforderlichen hohen Verarbeitungstemperaturen in den Verarbeitungsmaschinen Halogenwasserstoff abspalten können, der die Maschinen beschädigen und zur Produktverfärbung führen kann. Ferner bildet sich im Brandfalle Halogenwasserstoff, der in der Umgebung des Brandherdes erhebliche Korrosionen verursachen kann.

Nachteile bei der Verwendung von rotem Phosphor als Brandschutzmittel bestehen im wesentlichen darin, dass sich die pulverförmige rote Phosphor nur schwierig handhaben lässt, da er in Gegenwart von Luft bei Kontakt mit heissen Metallflächen, unter Bedingungen, die bei den üblichen Herstellungs- und Verarbeitungsmaschinen der Formmassen meistens gegeben sind zu Staubexplosionen neigt.

Nachteilig ist weiterhin die Entwicklung von giftigen Phosphor-Wasserstoff-Verbindungen, die bei den hohen Verarbeitungstemperaturen der Formmassen selbst bei Einhaltung von Vorsichtsmassnahmen, wie sie beispielsweise in den DE-AS 2 308 104, 2 625 673 und 2 625 691 beschrieben sind, in kleinen Mengen immer stattfindet.

Schliesslich erschwert die rote Farbe des Phosphors die Einstellung heller Farbtöne. Die Überdeckung der roten Farbe durch Weisspigmente führt zur Verschlechterung der mechanischen Eigenschaften.

Aus der DE-AS 1 283 532 und der DE-OS 2 359 700 ist die Verwendung von Ammoniumpolyphosphaten als Brandschutzmittel für Polyurethane bekannt. Für verstärkte und gefüllte Polyamidformmassen besitzt Ammoniumpolyphosphat jedoch keine nennenswerte Brandschutzwirkung, wie eigene Versuche zeigten. Im Brandtest nach Underwriters' Laboratories (UL), Subject 94, brennen beispielsweise Prüfkörper von

$^1/16$ und $^1/8$ Zoll Dicke aus glasfaserverstärktem Polyamid-6,6 mit einem Gehalt von 5 bzw. 15 Gew.-% Ammoniumphosphat bei senkrechter Anordnung während des Versuches völlig ab.

Es wurde nun gefunden, dass Alkali- und/oder Ammoniumpolyphosphat in Kombination mit Phenol-Aldehyd-Harzen bei verstärkten und/oder gefüllten Polyamid-Formmassen eine vorzügliche Flammfestigkeit verleihen. Es kann das Brandverhalten VO nach Underwriters' Laboratories (UL), Subject 94, eingestellt werden.

Dieser Synergismus überrascht besonders deshalb, weil die Phenol-Aldehyd-Harze selbst leicht brennbar sind, zur Verbesserung ihre Brandverhaltens einer Brandschutzausrüstung bedürfen und auch für sich allein als Brandschutzmittel in Polyamid-Formmassen keine nennenswerte Wirksamkeit besitzen. Gemäss der Lehre der US-PS 3 901 952 werden diese Harze Polyamiden zugemischt, um die Empfindlichkeit gegen Feuchtigkeit zu verbessern, und gemäss der Lehre des CH-PS 417 083 um gegen Hitze und Sauerstoff stabilisierte Polyamidformmassen zu erhalten.

Mit der erfindungsgemässen Brandschutzmittelkombination werden, da alle Komponenten fast farblos bzw. weiss sind, ausserdem Polyamidformmassen mit VO-Brandverhalten (nach UL) in hellen Farben zugänglich, die keinen der oben angeführten Nachteile aufweisen.

Gegenstand der vorliegenden Erfindung sind somit selbstverlöschende thermoplastische Formmassen, dadurch gekennzeichnet, dass sie eine Flammschutzmittelkombination von Alkali- und/oder Ammoniumphosphat mit Phenol-Aldehyd-Harz enthalten und sich wie folgt zusammensetzen:

1. mindestens 40, vorzugsweise 50–80 Gew.-% Polyamid,
2. 10–50, vorzugsweise 15–35 Gew.-% Verstärkungs- und/oder Füllstoff, und
3. 0–5 Gew.-% Verarbeitungshilfsmittel, Pigment, Farbstoff und/oder Stabilisator,
4. 0,5–20, vorzugsweise 2–15 Gew.-% Alkali- und/oder Ammoniumpolyphosphat,
5. 0,5–20, vorzugsweise 2–15 Gew.-% Phenol-Aldehydharz,

wobei die Summe aus 1.–5. immer 100 Gew.-% betragen muss.

Vorzugsweise werden aliphatische oder teilaliphatische Polyamide mit den erfindungsgemässen Flammschutzmittelkombinationen flammfest ausgerüstet, wie z.B. PA-6, PA-6,6, deren Gemische, Blockpolymere aus $\epsilon$-Caprolactam, Adipinsäure, Hexamethylendiamin, weiterhin PA-11 und -12 und Polyamide, die aus aliphatischen Diaminen und Adipinsäure und/oder Isophthalsäure und/oder Terephthalsäure und/oder Sebacinsäure und/oder Azelainsäure und/oder Cyclohexandicarbonsäure aufgebaut sind.

Als aliphatische Diaminkomponenten der Polyamide sind ausser Hexamethylendiamin 2,2,4-und 2,4,4-Trimethyl-hexamethylendiamin, Isophorondiamin, 1,3- und 1,4-Bisaminocyclohexan, Bis-aminocyclohexyl-alkane und Xylylendiamin zu nennen.

Ausserdem kommen Polyamide in Betracht, die aus den genannten aliphatischen Dicarbonsäuren und aromatischen Diaminen, wie z.B. m- und p-Phenylendiamin hergestellt werden.

Besonders bevorzugt kann Polyamid-6 und Polyamid-6,6 selbstlöschend flammfest ausgestattet werden.

Die erfindungsgemäss verwendeten Alkali- und/oder Ammoniumpolyphosphate entsprechen vorzugsweise der allgemeinen Formel

$$H_{[(n-m)+2]}(Me)_m P_n O_{3n+1}$$

in der n eine ganze Zahl im Bereich 3–1000, vorzugsweise 20–800, bedeutet und das Verhältnis m zu n ca. 1 beträgt.

Me steht vorzugsweise für Li, Na, K oder $NH_4$. Besonders bevorzugt werden Ammoniumpolyphosphate mit einem Kondensationsgrad (n) von 400–800 verwendet.

Die Alkalipolyphosphate können gemäss G. Brauer, Handbuch der präparativen anorganischen Chemie, 2. Auflage, S. 491–492 hergestellt werden.

Vorschriften für die Herstellung von Ammoniumpolyphosphat findet man in der DE-OS 2 230 174.

Die Polyphosphate entstehen durch Wasserabspaltung aus Orthophosphaten.

Phenol-Aldehyd-Harze im Sinne der Erfindung sind vorzugsweise im Bereich von –30 bis +350°C erweichende, vorzugsweise lineare Kondensationsprodukte aus Phenolen und Aldehyden, wie z.B. Formaldehyd und/oder Acetaldehyd.

Als phenolhaltige Verbindungen, aus denen die Harze hergestellt werden können, sind u.a. zu nennen: Phenol, n- und iso-Alkylphenole mit bis zu 8 C-Atomen in den Seitenketten, Naphthole, Hydroxydiphenyle, Hydroxydiphenyläther, Brenzcatechin, Resorcin, Hydrochinon, Bis-(hydroxyphenyl)-alkane und/oder -cycloalkane, Bis-(hydroxyphenyl)-sulfide, Bis-(hydroxyphenyl)-sulfone, Hydroxybenzoesäuren.

Die Phenol-Aldehyd-Harze werden nach bekannten Methoden hergestellt, wie sie beispielsweise in Houben-Weyl, Methoden der organischen Chemie, Band 14/2, 4. Auflage, S. 273 f. beschrieben sind.

Das Molverhältnis Aldehyd zur phenolischen Verbindung liegt in der Regel im Bereich 0,3–1,2, vorzugsweise im Bereich 0,5–0,9. Vorzugsweise werden die durch saure Kondensation erhaltenen Novolake verwendet.

Zur Erhöhung der Schmelzviskosität kann das Phenol-Aldehyd-Harz mit Borsäure, Phosphorsäure, Phosphoriger Säure, Estern der phosphorigen und Phosphorsäure, mehrwertigen Carbonsäuren, mehrfunktionellen Isocyanaten, mehrfunktionellen Epoxiden oder $PCl_3$ vernetzt werden. Bis zu 25 Gew.-% Vernetzungsmittel können dem Harz zugesetzt werden, vorzugsweise werden mehrfunktionelle Epoxide, Phosphorsäure und Borsäure verwendet.

Weiterhin kann die Überführung der Phenol-Aldehyd-Harze in Metallsalze von Vorteil sein, weil dadurch die Wirksamkeit der Brandschutzmittelkombination zumeist verbessert wird. Als Metalle zur Salzbildung kommen in Betracht: Alkali-, Erdalkalimetalle, Zink, Cadmium, Zinn, Blei, Antimon, Aluminium, Kupfer, Mangan, Eisen, Kobalt, Nickel. In den Harzen können eines oder mehrere der Metalle enthalten sein. Die Metallsalze können beispielsweise aus den Phenol-Aldehyd-Harzen und den Oxiden, Hydroxiden, Carbonaten, Acetaten, Formiaten, Phosphaten, Boraten der Metalle hergestellt werden. Bis zu 15 gew.-% dieser Metallverbindungen, vorzugsweise der Oxide, können den Harzen zugesetzt werden.

Die Phenol-Aldehyd-Harze können auch auf die Polyamid-Komponente der erfindungsgemässen Formmassen gepfropft werden, wenn das Vernetzungsagens (beispielsweise ein Diepoxid) mit dem Harz noch nicht oder noch nicht vollständig reagiert hat und ausreichend reaktiv ist, um bei der Einarbeitung der Brandschutzmittel mit dem Polyamid reagieren zu können.

Die Komponenten der Brandschutzmittelkombination können entweder jede für sich oder gemeinsam in die Polyamide eingearbeitet werden. Ausserdem ist eine Mischung der Komponenten vor der Einarbeitung in die Polyamide möglich.

Die Einarbeitung der Brandschutzmittel erfolgt gegebenenfalls gemeinsam mit Verstärkungs- und Füllstoffen, Verarbeitungshilfsmitteln, Pigmenten, Farbstoffen und Stabilisatoren, vorzugsweise in handelsüblichen Doppelwellenextrudern. Es sind jedoch auch Einwellenextruder und Kneter verwendbar.

Als Verstärkungsstoffe, die in den erfindungsgemässen Formmassen enthalten sind, sind u.a. die folgenden vorzugsweise zu nennen: Glas-, Asbestfasern, Glaskugeln, als Füllstoffe vorzugsweise Talkum, Wollastonit, Feldspate wie Microvit; Kreide, Quarz.

Verarbeitungshilfsmittel, Pigmente, Farbstoffe und Stabilisatoren können in bekannten Mengen, vorzugsweise von 0–5 Gew.-%, in den Formmassen enthalten sein. Vorzugsweise sind dies Salze der Stearinsäure, Russ, Cadmiumsulfid, Phthalocyanine, sterisch gehinderte Phenole.

Die erfindungsgemässen Formmassen können in handelsüblichen Spritzgiessmaschinen zu Formteilen mit ausgezeichnetem Brandverhalten verarbeitet werden.

Beispiele
Als Ammoniumpolyphosphat wurde ein Polyphosphat mit einem Kondensationsgrad n von 700 mit folgender Korngrössenverteilung verwendet:

Korndurchmesser:
<70 μm 100%
<40 μm 95%
<20 μm 80%

Als Natriumpolyphosphat (a) wurde Madrellsalz, hergestellt nach G. Brauer, Handbuch der präparativen anorganischen Chemie, 2. Auflage, S. 491, eingesetzt. Nach der Mahlung besass das Salz die folgende Korngrössenverteilung:

Korndurchmesser:

<70 $\mu$m 100%
<40 $\mu$m 89%
<20 $\mu$m 74%

Weiterhin wurde als Natriumpolyphosphat (b) ein Kurrolsches Salz, hergestellt nach G. Brauer, s. oben, S 493, folgender Teilchengrössenvertei-lung verwendet:

Teilchengrösse:

<70 $\mu$m 100%
<40 $\mu$m 91%
<20 $\mu$m 78%

Phenol- Aldehydharze I–XII
Die folgenden Harze wurden nach Houben-Weyl, Methoden der organischen Chemie, Band 14/2, 4. Auflage, Makromolekulare Stoffe II, S. 273 f. hergestellt:

A. Novolak aus Phenol und Formaldehyd. Erweichungsbereich 113–119 °C, Seite 273.

B. Novolak aus p-Phenyl-phenol und Formaldehyd, Erweichungsbereich 87–123 °C, Seite 274.

C. Novolak aus p-Kresol und Formaldehyd nach der Vorschrift von Versuch B, statt 945 g p-Phenyl-phenol jedoch 600 g p-Kresol eingesetzt. Erweichungsbereich 78–112 °C.

D. Novolak aus Resorcin und Formaldehyd. Erweichungsbereich 98–121 °C, Seite 274.

E. Novolak aus Phenol und Acetaldehyd, Erweichungsbereich 117–122 °C, Seite 275.

F. Resol aus Phenol und Formaldehyd, bei 20 °C hochviskoses Harz, Seite 278.

Tabelle 1: Vernetzung der Phenol-Aldehyd-Harze bzw. Überführung in Metallsalze

| | Harz | Zusatz | Gew.-% | Reaktions-temperatur °C | Reaktionszeit/h |
|---|---|---|---|---|---|
| I | A | Diepoxid* | 5 | 230 | 5 |
| II | A | Triäthylphosphat | 3 | 180–230 | 5 |
| III | A | ZnO | 1,5 | 230 | 4 |
| IV | A | Diepoxid* | 7/ZnCO$_3$0,5 | 230 | 1 |
| V | A | Borsäure | 1,1 | 240 | 3 |
| VI | A | Ca o | 1,3 | 250 | 3 |
| VII | B | Fe CO$_3$ | 2 | 240 | 3 |
| VIII | C | Diepoxid* | 3,5 | 230 | 5 |
| IX | C | H$_3$PO$_4$ | 0,5 | 210 | 2,5 |
| X | D | Diepoxid* | 2,4 | 230 | 5 |
| XI | E | Diepoxid* | 4 | 230 | 5 |
| XII | F | Toluylendiisocyanat | 3 | 200 | 1 |

* Diglycidyläther von 2,2-Bis-(4-hydroxyphenyl)-propan (Bisphenol A)

Die Harze A–F wurden, wie in Tabelle 1 angegeben, vernetzt bzw. in Metallsalze übergeführt. Nach dem Ausgiessen der Harze auf Bleche erstarrten sie schnell zu spröden Produkten, die sich leicht auf Korndurchmesser von ca. 2–4 $\mu$m zerkleinern liessen.

Beispiele 1–18
Die Einarbeitung der Phenol-Aldehyd-Harze und des Polyphosphats in die Polyamide erfolgte, gegebenenfalls gemeinsam mit Füll-, Verstärkungsstoffen, Pigmenten und Hilfsstoffen, in einem Einwellenextruder der Firma Reifenhäuser mit einem Schneckendurchmesser D von 30 mm und einer Schneckenlänge von 20 D.

Die Zusammensetzung, die Einarbeitungsbedingungen und das Brandverhalten der Mischungen sind aus Tabelle 2 ersichtlich.

Zur Prüfung des Brandverhaltens der Formmassen nach UL, Subj. 94, wurden ASTM-Prüfstäbe der Abmessungen ca. 1,5 · 12,5 · 127,5 und 3 · 12,5 · 127,5 mm nach dem Spritzgussverfahren hergestellt.

Die relative Lösungsviskosität ($\eta$ rel) der Polyamide wurde mit einer 1%igen Lösung in m-Kresol bei 25 °C gemessen.

Tabelle 2
Zusammensetzung, Herstellungsbedingungen und Brandverhalten der PA Mischungen

| Vers. Nr. | Polyamid/$\eta$ rel | Gew.-% in d. Mischg. | Ammonium-polyphosphat Gew.-% | Phenol-Aldehyd-Harz Gew.-% | Sonstige Zusätze Gew.-% | Masse-temp. °C | Brandverhalten nach UL, Sub. 94 Prüfstabdicke | |
|---|---|---|---|---|---|---|---|---|
| | | | | | | | 1,5 mm | 3 mm |
| 1 | PA-6,6 mit 35 Gew.-% Glasfaser/3,07 | 95 | 5 | – | – | 280 | brennt ab | brennt ab |
| 2 | ,, | 85 | 15 | – | – | 280 | brennt ab | brennt ab |
| 3 | ,, | 82 | – | A/18 | – | 270 | brennt ab | brennt ab |
| 4 | ,, | 82 | – | I/18 | – | 270 | brennt ab | brennt ab |
| 5 | ,, | 82 | 12 | I/6 | – | 280 | V0 | V0 |
| 6 | ,, | 80 | 10 | II/10 | – | 270 | v0 | v0 |
| 7 | ,, | 82 | 12 | III/6 | – | 280 | V1 | V0 |
| 8 | PA-6/2,97 | 62 | 12 | IV/6 | Kurglasfaser/20 | 270 | V1 | V1 |
| 9 | PA-6/2,97 | 60 | 12 | V/8 | Kurzglasfaser/20 | 270 | V1 | V0 |
| 10 | PA-6/2,97 | 62 | 12 | VI/6 | Kurzglasfaser/20 | 270 | V1 | V0 |
| 11 | Gemisch aus je 50% PA-6/2,97 und PA-6,6/3,07 | 62 | 12 | VII/6 | Kurzglasfaser/20 | 280 | V1 | V0 |
| 12 | ,, | 60 | 12 | VIII/8 | Kurzglasfaser/20 | 280 | V1 | V1 |
| 13 | ,, | 62 | 10 | IX/8 | Wollastonit/20 | 290 | V1 | V0 |
| 14 | ,, | 70 | 12 | X/8 | Talkum/10 | 280 | V1 | V0 |
| 15 | PA aus Isophthalsäure u. Hexamethylen-diamin/2,64 | 68 | 14 | XI/8 | Kreide/10 | 265 | VI | V1 |
| 16 | ,, | 60 | 12 | XII/8 | Wollastonit/20 | 265 | V0 | V0 |
| 17 | ,, | 60 | Madrellsalz | I/8 | Wollastonit/20 | 270 | V1 | V1 |
| 18 | ,, | 60 | Kurrolsches Salz | I/8 | Wollastonit/20 | 270 | V1 | V1 |

## Patentansprüche

1. Selbstverlöschende thermoplastische Formmassen, dadurch gekennzeichnet, dass sie eine Flammschutzmittelkombination von Alkali- und/ oder Ammoniumpolyphosphat mit Phenol-Aldehyd-Harz enthalten und sich wie folgt zusammensetzen:

1. mindestens 40 Gew.-% Polyamid,
2. 10–50 Gew.-% Verstärkungs- und/oder Füllstoff, und
3. 0–5 Gew.-% Verarbeitungshilfsmittel, Pigment, Farbstoff und/oder Stabilisator,
4. 0,5–20 Gew.-% Alkali- und/oder Ammoniumpolyphosphat und
5. 0,5–20 Gew.-% Phenol-Aldehyd-Harz, wobei die Summe aus 1–5 jeweils 100 Gew.-% betragen muss.

2. Formmassen nach Anspruch 1 bei unveränderter Komponente 3), enthaltend

50–80 Gew.-% der Komponente 1)
15–35 Gew.-% der Komponente 2)
2–15 Gew.-% der Komponente 4)
2–15 Gew.-% der Komponente 5).

3. Formmassen nach Ansprüchen 1 und 2, dadurch gekennzeichnet, dass als Polyamid Polyamid-6 und/oder Polyamid-6,6 verwendet wird.

4. Formmassen nach Ansprüchen 1 bis 3, dadurch gekennzeichnet, dass das Phenol-Aldehyd-Harz einen Erweichungspunkt von –30 bis +350 °C hat und das Kondensationsprodukt aus Phenolen und Formaldehyd und/oder Acetaldehyd ist.

5. Formmassen nach Ansprüchen 1 bis 4, dadurch gekennzeichnet, dass das Phenol-Aldehyd-Harz bis zu 25 Gew.-% Vernetzungsmittel enthält oder ganz oder teilweise als Metallsalz vorliegt.

6. Formmassen nach Ansprüchen 1 bis 5, dadurch gekennzeichnet, dass als Polyphosphat eine Verbindung der allgemeinen Formel

$$H_{[(n-m)+2]}(Me)_m P_n O_{3n+1}$$

verwendet wird, in der n eine ganze Zahl von 3–1000 und das Verhältnis m zu n ca. 1 beträgt und Me für Li, Na, K oder NH$_4$ steht.

7. Formmassen nach Ansprüchen 1 bis 6, dadurch gekennzeichnet, dass als Verstärkungsstoff Glas- oder Asbestfaser und/oder Glaskugeln und als Füllstoff Talkum, Wollastonit, Feldspaat, Kreide und/oder Quarz verwendet werden.

8. Formkörper aus Formmassen nach Ansprüchen 1 bis 7.

## Claims

1. Self-extinguishing thermoplastic moulding compositions, characterised in that they contain a flameproofing agent combination of an alkali metal polyphosphate and/or an ammonium polyphosphate with a phenol aldehyde resin and are composed of the following:

1. at least 40% by weight of a polyamide,
2. 10–50% by weight of a reinforcing material and/or filler, and
3. 0.5% by weight of a processing aid, a pigment, a dye and/or a stabiliser,
4. 0.5–20% by weight of an alkali metal polyphosphate and/or an ammonium polyphosphate and
5. 0.5–20% by weight of a phenol-aldehyde resin, the sum of 1.–5. having in each case to amount to 100% by weight.

2. Moulding compositions according to Claim 1 with component 3) being unchanged, containing:

50–80% by weight of component 1)
15–35% by weitht of component 2)
2–15% by weight of component 4) and
2–15% by weight of component 5).

3. Moulding compositions according to Claims 1 and 2, characterised in that the polyamide used is polyamid-6 and/or polyamide-6,6.

4. Moulding compositions according to Claims 1 to 3, characterised in that the phenol-aldehyde resin hat a softening point of from –30 to +350 °C and the condensation product is obtained from phenols and formaldehyde and/or acetaldehyde.

5. Moulding compositions according to Claims 1 to 4, characterised in that the phenol-aldehyde resin contains up to 25% by weight of a cross-linking agent or is completely or partly in the form of a metal salt.

6. Moulding compositions according to Claims 1 to 5, characterised in that the polyphosphate used is a compound of the general formula

$$H_{[(n-m)+2]}(Me)_m P_n O_{3n+1}$$

in which n is an integer of from 3–1000 and the ratio of m to n amounts to approximately 1 and Me represents Li, Na, K or NH$_4$.

7. Moulding compositions according to Claims 1 to 6, characterised in that glass or asbestos fibre and/or glass beads are used as the reinforcing material and talcum, wollastonite, feldspar, chalk und/or quartz are used as the filler.

8. Mouldings prepared from moulding compositions according to Claims 1 to 7.

## Revendications

1. Matières à mouler thermoplastiques autoextinguibles, caractérisées en ce qu'elles contiennent une combinaison ignifugeante de phosphate alcalin et/ou d'ammonium avec une résine phénol-aldéhyde et ont la composition suivante:

1. au moins 40% en poids de polyamide,
2. 10–50% en poids de matière de renforcement et/ou de matière de charge, et
3. 0–5% en poids d'auxiliaire de transformation, de pigment, de colorant et/ou de stabilisant,
4. 0,5–20% en poids de phosphate alcalin et/ou d'ammonium,
5. 0,5–20% en poids de résine phénol-aldéhyde, la somme de 1–5 devant toujours être de 100% en poids.

2. Matières à mouler selon la revendication 1, à composant 3) inchangé, contenant:

50–80% en poids du composant 1)

15–35% en poids du composant 2)

2–15% en poids du composant 4)

2–15% en poids du composant 5).

3. Matières à mouler selon les revendications 1 et 2, caractérisées en ce qu'on utilise comme polyamide le polyamide-6 et/ou le polyamide-6,6.

4. Matières à mouler selon les revendications 1 à 3, caractérisées en ce que la résine phénol-aldéhyde a un point de ramollissement de –30 à +350°C et est le produit de condensation de phénols et de formaldéhyde et/ou d'acétyldéhyde.

5. Matières à mouler selon les revendications 1 à 4, caractérisées en ce que la résine phénol-aldéhyde contient jusqu'à 25% en poids d'agent réticulant ou bien est totalement ou partiellement à l'état de sel.

6. Matières à mouler selon les revendications 1 à 5, caractérisées en ce que la polyphosphate est un composé de formule générale

$$H_{|(n-m)+2|}(Me)_m P_n O_{3n-1}$$

dans laquelle n est un nombre entier dans l'intervalle de 3–1000 et le rapport m/n est d'environ 1 et Me représente de préférence Li, Na, K ou $NH_4$.

7. Matières à mouler selon les revendications 1 à 6, caractérisées en ce que l'on utilise comme matière de charge des fibres de verre ou d'asbeste et/ou des billes de verre et comme matière de charge le talc, la wollastonite, le feldspath, la craie et/ou le quartz.

8. Pièce moulée en matières à mouler selon les revendications 1 à 7.